# EUROPEAN PATENT SPECIFICATION

(11) **EP 2 647 828 B1**
(45) Date of publication and mention of the grant of the patent: **08.03.2017**
(21) Application number: 12305416.5
(22) Date of filing: 06.04.2012
(51) Int. Cl.: F02M 69/14, F01N 3/20

(54) **Fluid injector**
Fluidinjektor
Injecteur de fluide

(43) Date of publication of application: 09.10.2013
(73) Proprietor: Cummins Cal Pacific, LLC, Irvine, CA 92606 (US)
(72) Inventor: Van Niekerk, Hermanus, Fullerton, CA California 92835 (US)
(74) Representative: Gevers & Orès

(56) References cited:
- DE-A1-102010 039 052
- DE-A1-102010 039 084
- US-A1- 2007 228 191

## Description

### FIELD OF THE INVENTION

The present invention relates generally to devices for injecting fluids, and more particularly to a fluid injector for injecting urea into an exhaust gas stream.

### BACKGROUND OF THE INVENTION

Exhaust emissions from internal combustion engines are a significant contributor to pollution in the environment. In particular, nitric oxide (NOx) emissions contribute to smog and acid rain. NOx, which includes both nitrogen oxide and nitrogen dioxide, is a byproduct of the combustion of fossil fuels, and diesel engines are regarded as a major generator of NOx.

To reduce the levels of NOx emitted into the atmosphere, the exhaust systems of internal combustion engines include catalytic converters that convert NOx into water and nitrogen. Catalytic converters in diesel engines do not work as well in reducing NOx in comparison to standard engines. This is due in part because diesel engines run cooler than standard engines, and the converters work better at higher temperatures. To address this shortcoming, the exhaust systems of diesel engines include a system for the Selective Catalytic Reduction (SCR) of NOx in which a urea solution is injected in the exhaust stream upstream of the catalytic converter. After injection into the exhaust stream, the urea solution evaporates and mixes with the exhaust stream. The urea decomposes and hydrolyzes into ammonia. NOx reacts with the thus generated ammonia in the presence of the catalyst and is catalytically reduced.

Many typical SCR systems utilize an injection nozzle that is solenoid or spring activated. Such injection nozzles typically only move between a single open and closed position and do not allow for precise control over the amount of urea that is injected into the exhaust stream. As a result, an insufficient amount of urea solution to neutralize the NOx in the exhaust stream may be introduced into the exhaust stream. To ensure that the NOx is fully neutralized, some systems inject a surplus of the urea solution into the exhaust stream, which may also be undesirable. Additionally, many urea injection systems use compressed air to assist in the injection and atomization process. The air acts as the delivery system and at the same time cleans out the delivery lines from unwanted urea thus mitigating any crystallization and clogging issues.

A known fluid injector is for instance proposed in DE 10 2010 039052 A1.

The fluid injector assembly typically comprises an injector body, a fluid inlet., a fluid outlet, a fluid passageway extending between the inlet and the outlet and a needle disposed at least partially in the injector body and being moveable between an open and closed position, the needle having a tip at an end which is configured to sealably close the fluid outlet.

Accordingly, there still exists a need for a fluid injector having improved control over the amount of urea solution discharged from the injector, and the ability to shut off the flow and prevent clogging of the injector due to crystallization.

### BRIEF SUMMARY OF THE INVENTION

Embodiments of the present invention provide a fluid injector assembly for the injection of a fluid. In one embodiment, the invention provides a fluid injector assembly comprising an injector body having a distal end and a proximal end, a fluid inlet disposed towards the distal end of the injector body, a fluid outlet disposed towards the proximal end of the injector body, and a fluid pathway extending between the inlet and the outlet. An injector needle is rotatably disposed at least partially in the injector body and is moveable between an open and closed position. The proximal end of the injector needle has a tip that is configured to sealably close the fluid outlet of the injector body. The fluid injector assembly includes a first threaded region that cooperates with a corresponding threaded region on the needle, and first and second cooperating coupling members that are arranged axially of the injector needle. The first coupling member is attached to a motor, and the second coupling member is attached to a distal end of the injector needle. The motor is configured to rotate the injector needle within the injector body which causes the threaded region of the injector to be driven in the first threaded region of the fluid injector assembly to thereby move the injector needle along a longitudinal axis of the fluid injector assembly between the open and closed positions.

At least one of the coupling members includes at least one connecting member that is slidingly inserted into a corresponding cavity on the other coupling member. Rotation of the first coupling member by the motor also rotates the second coupling member and the injector needle. Rotation of the injector needle causes the threaded region of the injector needle to be threaded through the first threaded region, which causes the injector needle to be rotably driven in a linear direction. Driving of the injector needle causes the at least one connecting member to slide In or out of the corresponding cavity so that the injector needle is moveable between the opened and closed positions.

In one embodiment of the present invention, the first threaded region is disposed in a collar that is disposed adjacent to a distal end of the injector body. In a preferred embodiment, the collar is disposed between the distal end of the injector body and the pair of coupling members. Preferably, rotational movement of the collar is fixed relative to the rotation of the injection needle. In an alternative embodiment, the first threaded region can be configured and arranged in a different portion of the fluid injector assembly, such as in a portion of the injector body.

In one embodiment, the fluid passageway is formed by an annular space that exists between the injector needle and an inner surface wall of the injector body. When in use, an injection fluid to be injected can be introduced into the fluid passageway via the fluid inlet. The fluid then flows through the fluid passageway to the injector outlet from which it can be discharged from the injector body.

In one alternative embodiment, the first and second coupling members each have a plurality of connecting members and a plurality of cavities that each correspond to an individual corresponding connecting member on the opposite coupling member. In a preferred embodiment, the first and second coupling members each include three connecting members and three corresponding cavities.

In a further embodiment, the fluid injector assembly of the present invention is particularly useful in an exhaust emissions system for the reduction of nitric oxide (NOx). In particular, the fluid injector assembly can be positioned within an exhaust gas stream upstream of a selective catalytic reduction (SCR) catalyst. In this embodiment, the fluid injector assembly can be used to introduce a stream of aqueous urea into an exhaust stream flow. While in the injector body, or shortly after being discharged therefrom, the urea stream is subjected to conditions (e.g., heat) that cause the urea to decompose into steam and ammonia. The resulting ammonia is discharged into the exhaust stream where it mixes with the exhaust stream and is carried downstream to the catalyst where the ammonia and NOx react in the catalyst to convert the NOx to nitrogen gas and water. The resulting clean flow is then discharged from an outlet disposed downstream of the catalyst.

The exhaust emissions system may also include a particulate filter that is disposed upstream or downstream of the urea injection nozzle. The particulate filter assists in the removal of particulate matter from the exhaust stream like soot, soluble organic fraction (SOF), and other pollutants produced by engine.

Aspects of the invention are also directed to the use of one or more heating elements that are disposed upstream of the urea injection. The heating element(s) assist in the heating of the exhaust stream prior to the urea injection. Generally, urea injection and catalyst performance is improved at temperatures above about 450° F. In addition, an exhaust stream temperature greater than about 450° F is generally desirable for the decomposition of urea into ammonia. In the present invention, the presence of the heating element upstream of the urea injection helps to ensure that the urea injection and catalyst operates most efficiently and that the temperature within the exhaust stream is sufficient to decompose the urea into ammonia.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a cross-sectional view of an fluid injector assembly in accordance with one embodiment of the present invention;
FIGS. 2 and 3 are cross-sectional side views of a distal portion of the fluid injector assembly depicted in FIG. 1;
FIGS. 4 and 5 show the coupling members of the fluid injector assembly depicted in FIG. 1;
FIGS. 6A and 6B are cross-sectional side views of a proximal portion of the fluid injector assembly depicted in FIG. 1;
FIG. 7 depicts the fluid injector assembly of FIG. 1 in conjunction with a cooling jacket;
FIGS. 8 and 9 illustrates an alternative embodiment of the invention in which the fluid injector assembly is fluid cooled;
FIG. 10 is a cross-sectional side view on an exhaust emission control system that is in accordance with an embodiment of the present invention; and
FIG. 11 is a partial perspective view of the exhaust emission control system of FIG. 10.

### DETAILED DESCRIPTION OF THE INVENTION

The present invention now will be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

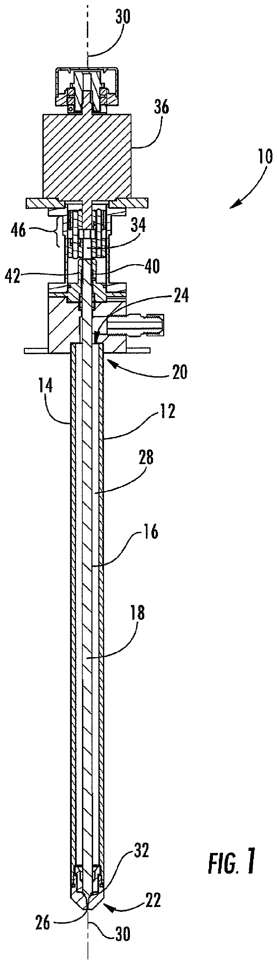

With reference to FIG. 1, a fluid injector assembly in accordance with an embodiment of the invention is illustrated and designated by reference number **10.** The fluid injector assembly **10** includes a first portion **12** having a longitudinally extending injector body **14** and a second portion **16** including an injector needle **18.** The injector body **14** includes a distal end **20** and a proximal end **22.** A fluid inlet **24** is disposed towards a distal end **20** of the injector body and a fluid outlet **26** is disposed towards the proximal end **22** of the injector body. A fluid passageway **28** extends from the fluid inlet to the fluid outlet along a longitudinal axis **30** of the fluid injector assembly **10.** When in use, a fluid to be injected by the fluid injector assembly is introduced into the fluid passageway via the fluid inlet. The fluid then flows through the fluid passageway to the injector outlet from which it can be discharged from the injector body. The fluid may be any fluid or gas appropriate for the particular application, including but not limited to, ammonia, fuel, water, or urea, or such as may be used in a selective catalytic reduction (SCR) catalyst system, for example.

In a preferred embodiment, the fluid passageway **28** is formed by a longitudinally extending annular space that exists between the injector needle **18** and an inner surface of the injector body.

The injector needle **18** is at least partially disposed in the injector body **14** and is configured and arranged to move between an opened and closed position. The injector needle includes a proximal end **32** having a tip that is configured and arranged to sealably close the fluid outlet, and a distal end **34** that is in mechanical communication with a motor **36**. As discussed in greater detail below, the first portion **12** of the fluid injector assembly includes a first threaded region **40** that cooperates with a corresponding threaded region **42** on the injector needle. Preferably, the position of the first threaded region is fixed relative to the movement of the injector needle. The motor is configured to rotate the injector needle within the injector body which causes the threaded region of the injector needle to be driven in the first threaded region of the fluid injector assembly to thereby linearly move the injector needle **18** along the longitudinal axis **30** between the open and closed positions.

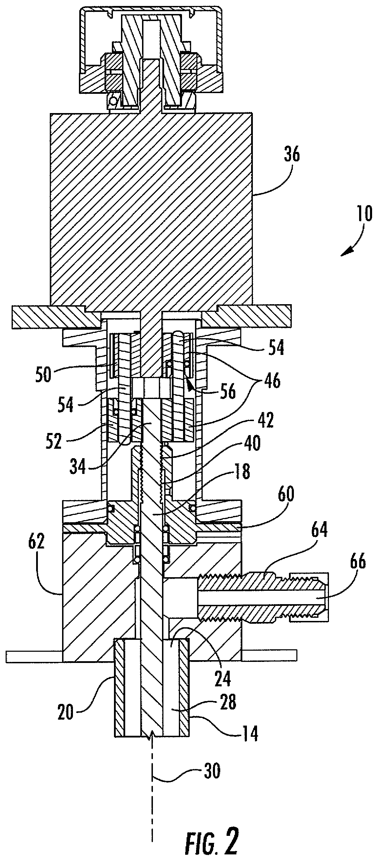

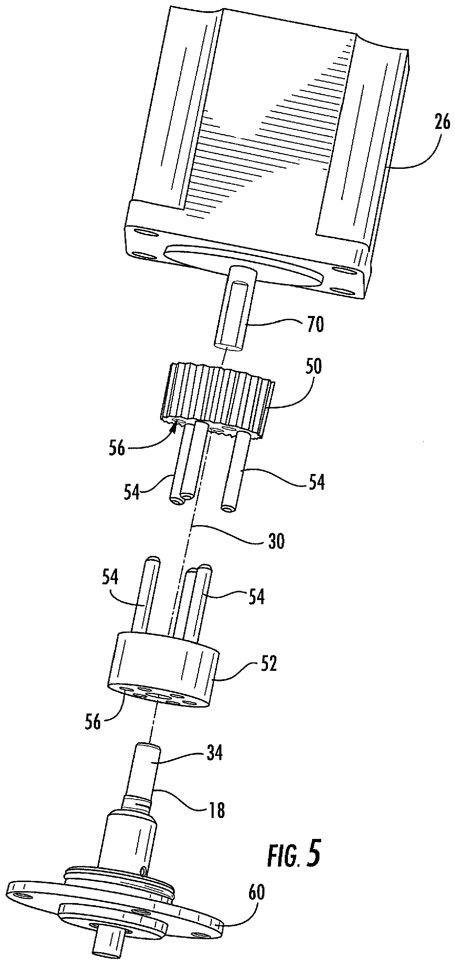

The distal end of the injector needle is in mechanical communication with the motor **36** via a pair of cooperating coupling members **46** that are arranged axially of the injector needle **18**. As can best be seen in FIGS. 2-5, the pair of coupling members **46** includes a first coupling member **50** that is rotatably attached to the motor **36** and a second coupling member **52** that is attached to the first coupling member and to the distal end **34** of the injector needle **18.** Typically, the first coupling member **50** is rotatably fixed or secured to the motor **36** via a motor shaft (See FIG. 5, reference number **70**) so that rotation of the motor will also rotate pair of coupling members. The first and second coupling members **50, 52** are moveably interconnected to each other by at least one connecting member **54** that is slidingly inserted into a corresponding cavity **56** on the opposite coupling member. The second coupling member **52** is linearly moveable along the longitudinal axis **30** relative to first coupling member **50**. That is, the second coupling member can move along the longitudinal axis of the fluid injector assembly while the position of the first coupling member relative to the longitudinal axis is fixed.

The first coupling member **50** can be attached to the motor shaft with a suitable fastening device, such as a set screw, that prevents linear movement of the first coupling member **50**. The injector needle **18** can be attached to the second coupling member **52** with suitable fastening devices, such as set screws, pins, bolts, and the like. In a preferred embodiment, a pair of set screws attach the second coupling member to the injector needle.

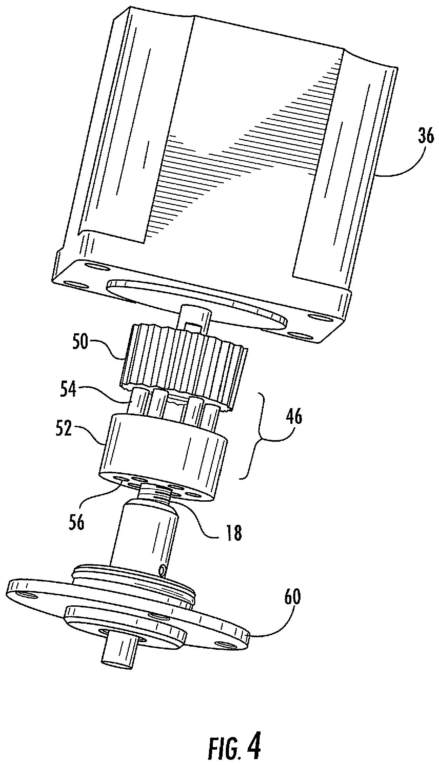

In the illustrated embodiment, the first and second coupling members each have a plurality of connecting members **54** and a plurality of cavities **56** that each correspond to a corresponding connecting member on the opposite coupling member. However, it should be recognized that the pair of connecting members can be interconnected via a single connecting member and a single corresponding cavity. For example, in the embodiment illustrated in FIGS. 4-5 the first and second coupling members each include three connecting members and three corresponding cavities. In an alternative embodiment, one of the coupling members can have a single annular shaped connecting member that is configured to be slidingly inserted into an annular shaped cavity on the opposite coupling member.

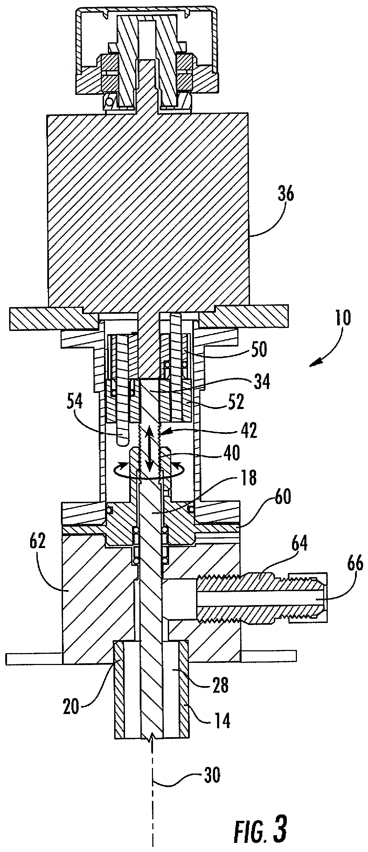

As shown in FIGS. 2 and 3, the first threaded region **40** is inter-threaded with the corresponding threaded region **42** on the injector needle **18**. In one embodiment of the present invention, the first threaded region **40** is disposed in a collar **60** that is attached to a mounting block **62** of the first portion of the needle injector assembly **10.** As shown, the mounting block **62** is attached to the injector body. Preferably, the movement of the collar **60** is fixed relative to the rotation of the injection needle **18**. Alternatively, the first threaded region **40** can be configured and arranged in a different portion of the injector needle assembly, such as in a portion of the injector body **14.**

As briefly noted above, first and second cooperating coupling members **50**, **52** are arranged axially of the injector needle **18**. Rotation of the first coupling member **50** by the motor **36** also rotates the second coupling member **52** and the injector needle **18**. This in turn causes the threaded region **42** of the injector needle **18** to be threaded through the first threaded region **40** so that the needle is rotably driven in the longitudinal direction of the injector needle assembly (i.e., so that the injector needle is driven towards or away from the injector outlet). Driving of the injector needle in the first threaded region also causes the distal end of the injector needle to move towards or away from the motor. In response to this movement, the at least one connecting member **54** of the pair of coupling members is configured to slide in or out of the corresponding cavity **56** on the opposite coupling member. In this way, rotational driving of the needle through the first threaded region also moves the second coupling member longitudinally along with the injector needle.

In one embodiment, the position of the injector needle within the injector body can be monitored and controlled so that a desired level of fluid is discharged from the fluid injector assembly. For example, a sensor, such as position feedback sensor, can be used to monitor the position of the injector needle relative to the injector body. The position feedback sensor can send signals to an electronic control unit (ECU) that can then instruct the motor to adjust the position of the injector needle accordingly.

The inventors have discovered that the fluid injector assembly of the present invention may help to provide improved control over the injection process and also may help improve control over the amount of fluid discharged from the fluid injector assembly. In particular, movement of the injector needle can be controlled to provide a desired level of fluid injected from the fluid injector assembly. In one embodiment, the motor can be instructed to move the injector needle into a fully closed position at any time, and thereby act as a clean-out drive for any contamination that may have accumulated near the proximal end of the injector body. Advantageously, the design and configuration of the fluid injector assembly has been selected to deliver near linear flow characteristics as a function of rotational motion over a wide range of operating conditions. Embodiments of the fluid injector assembly have linear flow characteristics that are capable of yielding flow operating ranges of 10:1, which is particularly use in the control of diesel engines.

In one embodiment, fluid is introduced into the fluid passageway **28** through a fluid fitment **64** in the mounting block **62**. The fluid fitment and the mounting block include a flow passageway **66** that is in fluid communication with the fluid inlet of the injector body.

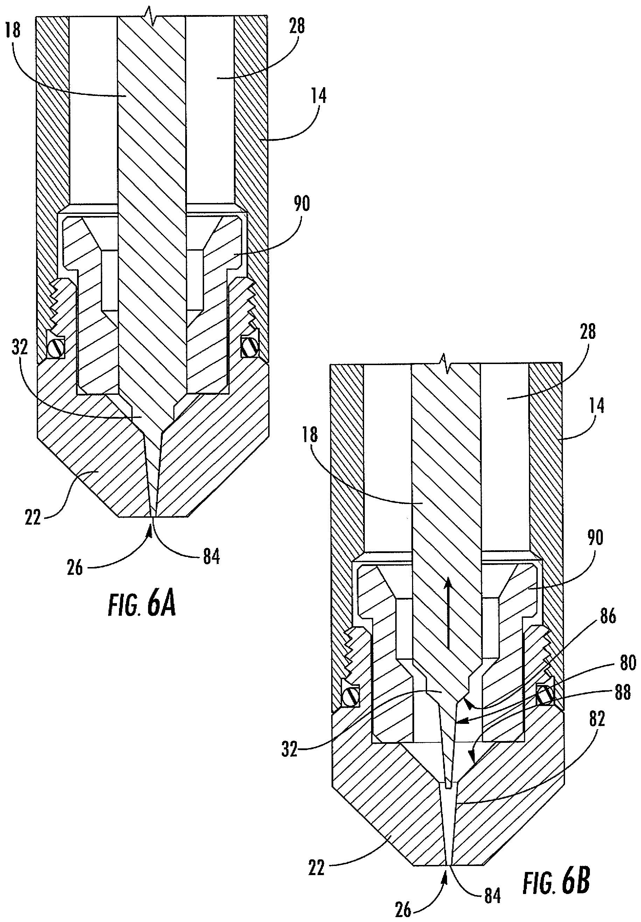

Referring to FIGS. 6A and 6B, a portion of the proximal end of the injector needle assembly is illustrated. In FIG. 6A, the injector needle **18** is shown in a closed position, and in FIG. 6B, the injector needle **18** is shown in an open position. The proximal end **22** of the injector body includes an opening **84** defining fluid outlet **26.** As shown, the proximal end of the injector needle **18** includes a conically-shaped surface **80** that cooperates with a corresponding conically-shaped surface **82** at the proximal end **22** of the injector body. Conically-shape surface **82** defines a needle flow path that cooperates with the corresponding surface **80** on the injector needle to create the desired flow characteristics. In a preferred embodiment, the injector needle **18** includes a second conically-shaped surface **86** and the injector body includes a second corresponding conically-shaped surface **88** to sealably close the fluid outlet when the injector needle is moved into a closed position.

In one embodiment, the proximal end **22** of the injector body **14** also includes a needle centering fitment **90** to help align the tip of the injector needle **18** with the fluid outlet **26.** In the illustrated embodiment, the needle centering fitment is shown as a separate piece that is removably secured to the proximal end of the injector body. In other embodiments, the needle centering fitment can be an integral portion of the injector body. For example, the needle centering fitment can be machined as part of the injector body.

As shown in FIG. 6B, the fluid outlet can be opened by moving the injector needle **18** so that the tip of the needle is not seated on surfaces **82**, **88** so that fluid can be discharged from the fluid outlet. In the illustrated embodiment, the shaft of the injector needle is shown in an open position where the fluid can flow between the tip of the injector needle and needle centering fitment. Alternatively, the needle centering fitment can include one or more capillaries or openings that permit the flow of the fluid from fluid passageway **28** to the proximal portion of the injector body.

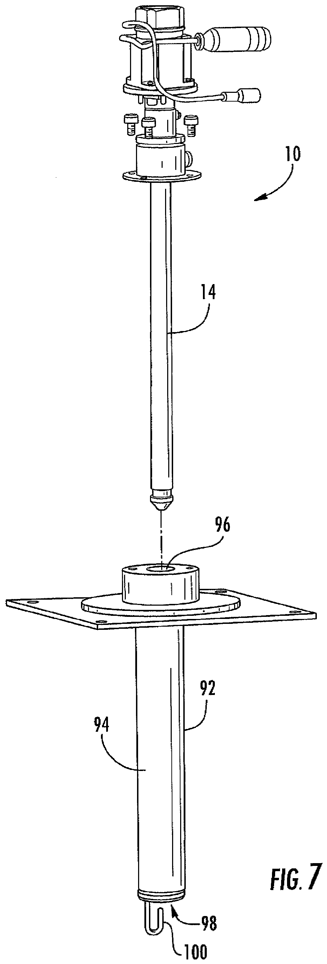

FIG. 7 illustrates an embodiment of the fluid injector assembly **10** that includes a cooling jacket **92** that helps to control the temperature of the fluid within the injector needle assembly at a desired temperature. The cooling jacket comprises an inner (not visible) and outer wall **94** defining an annular shaped internal cavity through which a cooling fluid is circulated to maintain the fluid to be injected by the fluid injector assembly within a desired temperature range. In one embodiment, the cooling jacket also includes an interior cavity (not visible) into which the fluid injector assembly can be removably inserted through opening **96**, and an opposite opening **98** from which fluid is discharged from the proximal end of the fluid injector assembly **10**.

In some embodiments, the fluid injector assembly **10** may include an impact surface **100** (e.g. a plate) positioned directly opposite the fluid outlet so that the spray of fluid injected by the fluid injector assembly **10** will impact the surface and become rapidly, finely dispersed.

In one advantageous embodiment, the fluid to be injected can also serve as the cooling fluid that is circulated in the cooling jacket. For example, the fluid injector assembly **10** and the cooling jacket can both be in fluid communication with the same fluid source. In one such embodiment, fluid provided from a fluid source is split into first and second fluid streams. The first stream is introduced into the cooling jacket where it is circulated and eventually returned to the fluid source (e.g., a tank or reservoir). The second fluid stream is introduced into the fluid passageway of the injector body via the fluid fitment (See briefly, FIG. 2, reference number **64**). In some embodiments, it may be desirable to filter the fluid prior to being introduced into the fluid passageway.

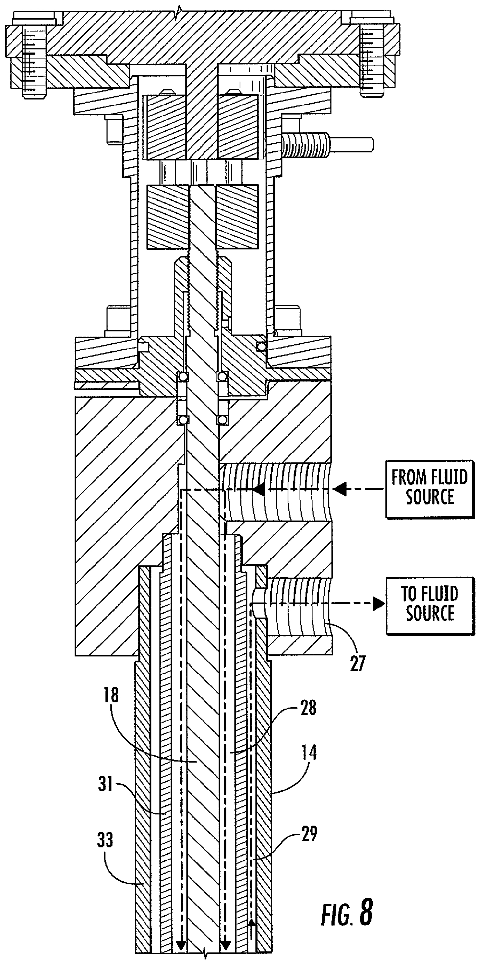

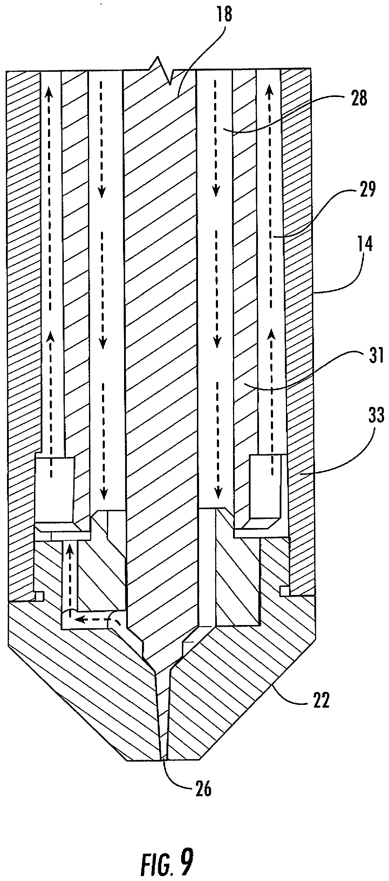

FIGS. 8 and 9 illustrate an alternative embodiment of the fluid injector assembly **10** in which the injection fluid is circulated through the injector body as a cooling fluid. In this embodiment, the injector body includes an inner fluid passageway **28** through which the injection fluid flows from a source of injector fluid and is introduced into the fluid passageway **28** via the fluid inlet **24** towards the fluid outlet **26**, and a second fluid passageway **29** from which injection fluid flows from the proximal end of the of the injector body and exits the injector body through a second fluid outlet **27**. As noted above, the fluid passageway **28** is defined by the space between the injector needle **18** and an inner wall **31** of the injector body. Second fluid passageway **29** is defined by the space between the inner wall **31** and an outer wall **33** of the injector body. In FIGS. 8 and 9, the dashed arrows represent the flow of the injection fluid as it moves through fluid passageway **28** towards the injector outlet **26**, and recirculated through second fluid passageway **29** and is returned to the fluid source via second fluid outlet **27**.

Maintaining the injection fluid within a select temperature range may provide several advantages. For example in the case of injection of aqueous urea, controlling the temperature of the injection fluid may help prevent solidification of the urea within the injector body, and in particular in the area towards the fluid outlet of the of the injector body. If allowed to solidify, the urea could prevent proper seating of the tip of the injection needle or could cause the injector needle to seize in either the open or closed position and/or the fluid outlet could become clogged. In addition, the detrimental effects of elevated temperature on the reagent, the moving parts, and the openings of the valve are avoided. For example, by directly cooling the injector body, increased performance may be achieved in comparison with the prior art. Further, increased cooling may help provide for prolonged life of the injector components.

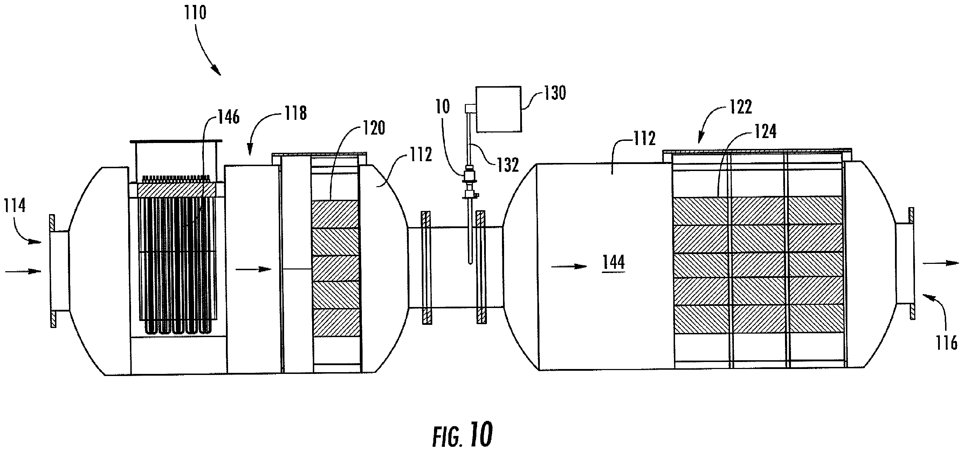

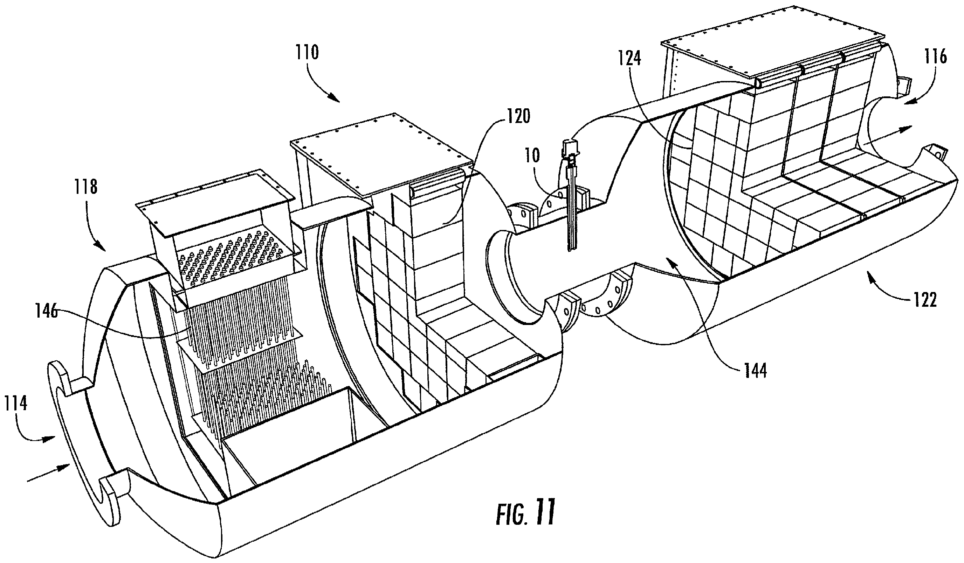

In one embodiment, the fluid injector assembly is particularly useful in an exhaust emissions control apparatus for the treatment of an exhaust gas stream. In this regard, FIGS. 10 and **11** shows an emissions control apparatus **110**. The apparatus includes a housing **112** having an inlet **114** for receiving an exhaust stream from an internal combustion engine and a downstream outlet **116** from which the exhaust stream is discharged. In the illustrated embodiments, the apparatus **110** is shown as having three distinct sections: an upstream section **118** containing a particulate filter **120**, a downstream catalyst section **122** containing a catalyst **124**, and a urea injector nozzle assembly **10** is disposed therebetween. It should be recognized that in alternative embodiments, the particulate filter, catalyst, and injector nozzle assembly **10** can be incorporated into a single housing structure.

In this embodiment of the present invention, the fluid injector assembly **10** provides a stream of ammonia that is introduced into the exhaust stream. The ammonia stream mixes with the exhaust stream and is carried downstream to the catalyst **124** where the ammonia and NOx react in the catalyst **124** to convert the NOx to nitrogen gas and water. The resulting clean flow is then discharged from outlet **116**.

As shown in FIGS. 10 and 11, the catalyst **124** is disposed in the housing **112** towards the downstream outlet **116**. The catalyst **124** includes a Selective Catalytic Reduction (SCR) catalyst that is capable of reducing the NOx concentration in the exhaust stream in the presence of ammonia. Examples of possible catalysts that may be used in the present invention include activated carbon, charcoal or coke, zeolites, vanadium oxide, tungsten oxide, titanium oxide, iron oxide, copper oxide, manganese oxide, chromium oxide, noble metals such as platinum group metals like platinum, palladium, rhodium, and iridium, or mixtures thereof. In addition to the SCR catalyst, the apparatus can include other catalyst, such as an oxidative catalyst.

The fluid injector assembly **10** is disposed in the housing upstream of the catalyst **124**, and is configured and arranged to introduce an ammonia stream into the exhaust stream. The fluid injector assembly **10** is in fluid communication with an aqueous urea solution source **130** via supply line **132**. A stream of aqueous urea solution is introduced into the fluid injector assembly **10** from urea source **130**. Once in the fluid injector assembly **10**, the aqueous urea solution is exposed to conditions (e.g., heat) that cause the urea solution to evaporate and hydrolyze to form ammonia. The resulting ammonia stream is then discharged from the outlet of the fluid injector assembly **10** and into the exhaust stream.

In some embodiments, the apparatus **10** may also include.a mixing element (not shown) that helps in the uniform distribution of the ammonia into the exhaust stream. The mixing element is typically disposed downstream of the outlet of the fluid injector assembly **10** and comprises a fin device, such as fan, having fins or blades. The exhaust stream flows through the mixing element and the path of the path of the exhaust stream is disturbed creating a turbulent flow of the exhaust stream on downstream side of the mixing device. As a result, the ammonia introduced into the exhaust stream can be more uniformly distributed therein. Downstream of the fluid injector assembly **10** and mixing element, the apparatus includes a mixing zone **144**.

As shown in FIGS. 10 and 11, the apparatus may also include a particulate filter **120** that is disposed upstream of the fluid injector assembly **10**. Although not illustrated, it should be recognized that the particulate filter **120** can also be disposed downstream of the fluid injector assembly. Particulate filter **120** may be any general type of exhaust filter known in the art, and may include any type of filter media (not shown) known in the art, such as, for example, a ceramic foam, ceramic, sintered metal, metal foam, or silicon carbide, or silicon carbide foam type filter. The particulate filter assists in the removal of particulate matter from the exhaust stream like soot, soluble organic fraction (SOF), and other pollutants produced by engine. The particulate filter may be situated horizontally, vertically, radially, or in any other configuration allowing for proper filtration. In a preferred embodiment, the particulate filter comprises a diesel particulate filter (DPF).

In addition to the particulate filter, the apparatus may also include one or more heating elements for heating the exhaust stream prior to the particulate filter. As shown in FIGS. 10 and 11, a heating element **146** is disposed upstream of the particulate filter **120**. Generally, the particulate filter operates most efficiently when the exhaust stream temperature is greater than about 750° F. At temperatures below about 750° F, the particulate filters have a tendency to clog at a faster rate due to the accumulation of particulate matter in the filter. This is particularly true, for diesel particulate filters where the presence of soot in the exhaust stream is higher in comparison to gas powered engines. In addition, an exhaust stream temperature greater than about 450° F is generally desirable for the decomposition of urea into ammonia. By incorporating a heating element upstream of the particulate filter, it is possible to maintain the exhaust stream temperature at a desired temperature, such as greater than about 450° F, and in particular, greater than about 750° F. Preferably, the heating element is configured and arranged to maintain the temperature of the exhaust stream at about 800° F.

In a preferred embodiment, the heating element includes a plurality of individual heating elements that can be independently operated and controlled. For example, the heating element may include from about 1 to 10 individual heating banks and in particular, from about 2 to 8 heating banks. In one embodiment, the heating element includes 5 heating banks. Each of the heating banks can be operated independently of each other so that a desired temperature of the exhaust stream can be maintained. For example, if the engine is operating under a low load capacity, the exhaust temperature may be relatively low, such as below the required threshold of 600° F. At this state, the temperature of the exhaust stream may not be sufficient to decompose the urea into ammonia. To compensate for this, the apparatus includes a controller (not shown), such as a programmable logic controller (PLC) that will provide by power to the heating elements to raise the temperature of the exhaust stream to a desired level. In this case, it may be necessary to power all or a majority of the heating banks. However, if the engine is running under a higher load, the temperature of the exhaust stream may already be elevated in comparison to a low load state. In such a case, it may only be necessary to power some of the heating banks to heat the exhaust stream to the desired temperature. In this case, the controller would monitor the exhaust stream temperature and power or depower the heating elements as needed to raise or lower the temperature of the exhaust stream so that it can be maintained at a desired level.

In one embodiment, the heating element is powered by the engine itself. In this case, powering of the heating element heats the exhaust stream by providing a load on the engine which will raise the exhaust stream temperature in addition to the heat provided by the heating element. As a result, the temperature of the exhaust stream can be rapidly increased to temperatures sufficient for the decomposition of urea so that the NOx control can be maintained throughout the operation of the engine. For example, embodiments of the present provide for heating of the exhaust stream to temperatures necessary for NOx control on the order of about 4 minutes following start-up of the engine. Advantageously, the exhaust temperature can be controlled to about 800° F within approximately 8 minutes of engine startup. As a result, the present invention is able to make the SCR system capable over about 99% of the operational cycle of the engine.

The above described system and apparatus can be used with a variety of different engine applications. In particular, the apparatus and system are particularly useful in combinations with diesel powered generators. For example, in the case of emergency standby generators the ability to achieve normal operating temperatures for urea injection can be problematic. Typically, an emergency standby generator is designed for building steady state electrical requirements plus transient motor starting needs. During weekly maintenance test the generator is off-line and typically no load will exist. In addition, during intermittent power outages, it is highly likely that a generator will run for less than 30 minutes, which is generally an insufficient duration of time for the engine and emission control system to achieve a full steady state temperature that is needed to ensure proper urea injection and cleaning of the particulate filter. The aforementioned factors may contribute to an emission control system in which 1) soot and particulate matter accumulate in the particulate filter; 2) insufficient time to "clean" out the particulate filter; and 3) ineffective NOx reduction in the SCR catalyst due insufficient decomposition of the urea into the required levels of ammonia.

## Claims

1. A fluid injector assembly (10) comprising:
an injector body (14) having a distal end (20) and a proximal end (22);
a fluid inlet (24) disposed towards the distal end of the injector body;
a fluid outlet (26) disposed towards the proximal end of the injector body;
a fluid passageway (28) extending between the inlet and the outlet;
a needle (18) disposed at least partially in the injector body and being moveable between an open and closed position, the needle having a tip at a proximal end (32) thereof, the tip being configured to sealably close the fluid outlet;
**characterized in that** the needle (18) is rotatably disposed at least partially in the injector, and **in that** said fluid injector assembly further comprises a first threaded region (40) that cooperates with a corresponding threaded region (42) on the needle; and
first (50) and second (52) cooperating coupling members (46) arranged axially of the needle, the first coupling member being attached to a motor (36), and the second coupling member being attached to a distal end (34) of needle, wherein at least one of the coupling members includes at least one connecting member (54) that is slidingly inserted into a corresponding cavity (56) on the other coupling member,
wherein rotation of the first coupling member by the motor also rotates the second coupling member and the needle, which in turn causes the threaded region of the needle to be threaded through the first threaded region so that the needle is rotably driven between the opened and closed positions, and wherein driving of the needle causes the at least one connecting member to slide in or out of the corresponding cavity.

2. The fluid injector assembly of Claim 1, wherein the first and second coupling members each comprise a plurality of connecting members and corresponding cavities.

3. The fluid injector assembly of Claim 1, wherein the first and second coupling members each comprise at least three connecting members and at least three cavities that each correspond to an individual connecting member on the opposite coupling member.

4. The fluid injector assembly according to any of the preceding claims, wherein the first threaded region is arranged in a collar (60) disposed adjacent to the distal end of the injector body.

5. The fluid injector assembly according to any of the preceding claims, wherein the first threaded region is arranged in the injector body.

6. The fluid injector assembly of according to any of the preceding claims, further comprising a cooling jacket (92) circumferentially surrounding said injector body, the cooling jacket being configured to receive and recirculate a cooling fluid therein to maintain a fluid within the fluid injector assembly at a desired temperature.

7. The fluid injector assembly of Claim 6, wherein the cooling fluid comprises the fluid to be injected by fluid injector assembly.

8. The fluid injector assembly of Claim 6, further comprising a fluid source that is in fluid communication with the fluid inlet and the cooling jacket.

9. The fluid injector assembly according to any of the preceding claims, further comprising a center fitment (90) disposed towards the proximal end of the injector body, the center fitment being configured and arranged to align the injector needle with the fluid outlet.

10. The fluid injector assembly according to any of the preceding claims, wherein the proximal end of the injector body includes at least one conically-shaped surface (82) that is configured and arranged to cooperate with a corresponding conically shaped surface (80) on the proximal end of the injector needle.

11. The fluid injector assembly according to any of the preceding claims, wherein the fluid pathway comprises a longitudinally extending annular shaped passageway.

12. An exhaust emission control system for an engine comprising:
a housing (112) having inlet (114) for receiving an exhaust stream from the engine and an outlet (116) for discharging the exhaust stream;
a urea source (130);
the fluid injector assembly according to any of the preceding claims in fluid communication with said urea source, the fluid injection system being configured to discharge a stream of urea into the exhaust stream; and
a catalyst (124) disposed downstream of the fluid injector assembly.

13. The exhaust emission control system of Claim 12, wherein the catalyst is a selective catalytic reduction converter.

14. The exhaust emission control system according to any of Claims 12 or 13, wherein the engine is a diesel engine.

15. The exhaust emission control system according to any of claims 12 to 14, further comprising a particulate filter (120) disposed upstream or downstream of the fluid injector assembly.

16. The exhaust emission control system of Claim 15, wherein in one or more heating elements (146) are disposed upstream of the particulate filter.

17. The exhaust emission control system of Claim 16, wherein the system includes at least two heating elements (146) that are controlled independently of each other such that the an exhaust stream temperature in the range of about 450 to 900° F can be maintained.

## Patentansprüche

1. Fluidinjektoranordnung (10), die Folgendes umfasst:
einen Injektorkörper (14), der ein distales Ende (20) und ein proximales Ende (22) hat;
einen Fluideinlass (24), der zu dem distalen Ende des Injektorkörpers hin angeordnet ist;
einen Fluidauslass (26), der zu dem proximalen Ende des Injektorkörpers hin angeordnet ist;
eine Fluidpassage (28), die sich zwischen dem Einlass und dem Auslass erstreckt;
eine Nadel (18), die mindestens teilweise in dem Injektorkörper angeordnet ist und zwischen einer offenen und einer geschlossenen Position bewegbar ist, wobei die Nadel eine Spitze an ihrem proximalen Ende (32) hat, wobei die Spitze ausgelegt ist, um den Fluidauslass abdichtbar zu schließen;
**dadurch gekennzeichnet, dass** die Nadel (18) drehbar mindestens teilweise in dem Injektor angeordnet ist, und dass die Fluidinjektoranordnung einen ersten Gewindebereich (40) umfasst, der mit einem entsprechenden Gewindebereich (42) auf der Nadel zusammenwirkt; und
ein erstes (50) und ein zweites (20) zusammenwirkendes Kopplungselement (46), die axial zu der Nadel eingerichtet sind, wobei das erste Kopplungselement an einem Motor (36) angebracht ist, und das zweite Kopplungselement an einem distalen Ende (34) der Nadel angebracht ist, wobei mindestens eines der Kopplungselemente mindestens ein Verbindungselement (54) aufweist, das gleitend in einen entsprechenden Hohlraum (56) auf dem anderen Kopplungselement eingefügt ist,
wobei die Drehung des ersten Kopplungselements durch den Motor auch das zweite Kopplungselement und die Nadel dreht, was wiederum den Gewindebereich der Nadel veranlasst, durch den ersten Gewindebereich geschraubt zu werden, so dass die Nadel drehbar zwischen der offenen und der geschlossenen Position angetrieben ist, und wobei das Antreiben der Nadel das mindestens eine Verbindungselement veranlasst, in den entsprechenden Hohlraum oder aus ihm heraus zu gleiten.

2. Fluidinjektoranordnung nach Anspruch 1, wobei das erste und das zweite Kopplungselement jeweils eine Vielzahl von Verbindungselementen und entsprechende Hohlräume aufweisen.

3. Fluidinjektoranordnung nach Anspruch 1, wobei das erste und das zweite Kopplungselement jeweils mindestens drei Verbindungselemente und mindestens drei Hohlräume aufweisen, die jeweils einem einzelnen Verbindungselement auf dem entgegengesetzten Kopplungselement entsprechen.

4. Fluidinjektoranordnung nach einem der vorhergehenden Ansprüche, wobei der erste Gewindebereich in einem Kragen (60), der benachbart zu dem distalen Ende des Injektorkörpers angeordnet ist, eingerichtet ist.

5. Fluidinjektoranordnung nach einem der vorhergehenden Ansprüche, wobei der erste Gewindebereich in dem Injektorkörper eingerichtet ist.

6. Fluidinjektoranordnung nach einem der vorhergehenden Ansprüche, die ferner einen Kühlmantel (92) umfasst, der den Injektorkörper umfänglich umgibt, wobei der Kühlmantel ausgelegt ist, um ein Kühlfluid aufzunehmen und umzuwälzen, um ein Fluid innerhalb der Fluidinjektoranordnung an einer gewünschten Temperatur zu halten.

7. Fluidinjektoranordnung nach Anspruch 6, wobei das Kühlfluid das Fluid umfasst, das durch die Fluidinjektoranordnung einzuspritzen ist.

8. Fluidinjektoranordnung nach Anspruch 6, die ferner eine Fluidquelle umfasst, die in fluidtechnischer Verbindung mit dem Fluideinlass und dem Kühlmantel ist.

9. Fluidinjektoranordnung nach einem der vorhergehenden Ansprüche, die ferner eine Mittenpassung (90) umfasst, die zu dem proximalen Ende des Injektorkörpers hin angeordnet ist, wobei die Mittenpassung ausgelegt und eingerichtet ist, um die Injektornadel mit dem Fluidauslass auszurichten.

10. Fluidinjektoranordnung nach einem der vorhergehenden Ansprüche, wobei das proximale Ende des Injektorkörpers mindestens eine kegelförmige Oberfläche (82) aufweist, die ausgelegt und eingerichtet ist, um mit einer entsprechenden kegelförmigen Oberfläche (80) auf dem proximalen Ende der Injektornadel zusammenzuwirken.

11. Fluidinjektoranordnung nach einem der vorhergehenden Ansprüche, wobei der Fluidweg eine sich längs erstreckende ringförmig geformte Passage umfasst.

12. Abgasemissionssteuersystem für eine Maschine, das Folgendes umfasst:
ein Gehäuse (112), das einen Einlass (114) zum Aufnehmen eines Abgasstroms von der Maschine und einen Auslass (116) zum Auslassen des Abgasstroms hat;
eine Harnstoffquelle (130);
die Fluidinjektoranordnung nach einem der vorhergehenden Ansprüche in fluidtechnischer Verbindung mit der Harnstoffquelle, wobei das Fluidinjektionssystem ausgelegt ist, um einen Harnstoffstrom in den Abgasstrom zu entladen; und
einen Katalysator (124), der stromabwärts der Fluidinjektoranordnung angeordnet ist.

13. Abgasemissionssteuersystem nach Anspruch 12, wobei der Katalysator ein selektiver katalytischer Reduktionswandler ist.

14. Abgasemissionssteuersystem nach einem der Ansprüche 12 oder 13, wobei die Maschine eine Dieselmaschine ist.

15. Abgasemissionssteuersystem nach einem der Ansprüche 12 bis 14, die ferner ein Partikelfilter (120) umfasst, das stromaufwärts oder stromabwärts der Fluidinjektoranordnung angeordnet ist.

16. Abgasemissionssteuersystem nach Anspruch 15, wobei in ein oder mehr Heizelemente (146) stromaufwärts des Partikelfilters angeordnet sind.

17. Abgasemissionssteuersystem nach Anspruch 16, wobei das System mindestens zwei Heizelemente (146) aufweist, die unabhängig voneinander derart gesteuert werden, dass die eine Abgasstromtemperatur in dem Bereich von etwa 450 bis 900 °F aufrechterhalten werden kann.

## Revendications

1. Ensemble injecteur de fluide (10) comprenant :
un corps d'injecteur (14) ayant une extrémité distale (20) et une extrémité proximale (22) ;
une entrée de fluide (24) disposée vers l'extrémité distale du corps d'injecteur ;
une sortie de fluide (26) disposée vers l'extrémité proximale du corps d'injecteur ;
un passage de fluide (28) s'étendant entre l'entrée et la sortie ;
une aiguille (18) disposée au moins partiellement dans le corps d'injecteur et étant mobile entre une position ouverte et fermée, l'aiguille ayant une pointe au niveau d'une extrémité proximale (32) de celle-ci, la pointe étant configurée pour fermer de manière hermétique la sortie de fluide ;
**caractérisé en ce que** l'aiguille (18) est disposée de manière rotative au moins partiellement dans l'injecteur, et **en ce que** ledit ensemble injecteur de fluide comprend en outre une première région filetée (40) qui coopère avec une région filetée correspondante (42) sur l'aiguille ; et
des premier (50) et second (52) éléments de couplage coopérants (46) agencés axialement par rapport à l'aiguille, le premier élément de couplage étant attaché à un moteur (36), et le second élément de couplage étant attaché à une extrémité distale (34) de l'aiguille, dans lequel au moins l'un des éléments de couplage inclut au moins un élément de liaison (54) qui est inséré de manière coulissante à l'intérieur d'une cavité correspondante (56) sur l'autre élément de couplage,
dans lequel une rotation du premier élément de couplage par le moteur met également en rotation le second élément de couplage et l'aiguille, qui à son tour amène la région filetée de l'aiguille à être enfilée à travers la première région filetée de sorte que l'aiguille soit entraînée de manière rotative entre les positions ouverte et fermée, et dans lequel l'entraînement de l'aiguille amène l'au moins un élément de liaison à coulisser dans ou hors de la cavité correspondante.

2. Ensemble injecteur de fluide selon la revendication 1, dans lequel les premier et second éléments de couplage comprennent chacun une pluralité d'éléments de liaison et de cavités correspondantes.

3. Ensemble injecteur de fluide selon la revendication 1, dans lequel les premier et second éléments de couplage comprennent chacun au moins trois éléments de liaison et au moins trois cavités qui correspondent chacune à un élément de liaison individuel sur l'élément de couplage opposé.

4. Ensemble injecteur de fluide selon l'une quelconque des revendications précédentes, dans lequel la première région filetée est agencée dans un collet (60) disposé de manière adjacente par rapport à l'extrémité distale du corps d'injecteur.

5. Ensemble injecteur de fluide selon l'une quelconque des revendications précédentes, dans lequel la première région filetée est agencée dans le corps d'ïnjecteur.

6. Ensemble injecteur de fluide selon l'une quelconque des revendications précédentes, comprenant en outre une chemise d'eau (92) entourant de manière circonférentielle ledit corps d'injecteur, la chemise d'eau étant configurée pour redevoir et faire re-circuler un liquide de refroidissement à l'intérieur de celle-ci pour maintenir un fluide à l'intérieur de l'ensemble injecteur de fluide à une température souhaitée.

7. Ensemble injecteur de fluide selon la revendication 6, dans lequel le fluide de refroidissement comprend le fluide à ïnjecter par un ensemble injecteur de fluide.

8. Ensemble injecteur de fluide selon la revendication 6, comprenant en outre une source de fluide qui est en communication fluidique avec l'entrée de fluide et la chemise d'eau.

9. Ensemble injecteur de fluide selon l'une quelconque des revendications précédentes, comprenant en outre un raccord central (90) disposé vers l'extrémité proximale du corps d'injecteur, le raccord central étant configuré et agencé pour aligner l'aiguille d'injecteur avec la sortie de fluide.

10. Ensemble injecteur de fluide selon l'une quelconque des revendications précédentes, dans lequel l'extrémité proximale du corps d'injecteur inclut au moins une surface de forme conique (82) qui est configurée et agencée pour coopérer avec une surface de forme conique correspondante (80) sur l'extrémité proximale de l'aiguille d'injecteur.

11. Ensemble injecteur de fluide selon l'une quelconque des revendications précédentes, dans lequel le passage de fluide comprend un passage de forme annulaire s'étendant de manière longitudinale.

12. Système de commande d'émission de gaz d'échappement pour un moteur comprenant :
un logement (112) ayant une entrée (114) pour recevoir un courant de gaz d'échappement provenant du moteur et une sortie (116) pour évacuer le courant de gaz d'échappement ;
une source d'urée (130) ;
l'ensemble injecteur de fluide selon l'une quelconque des revendications précédentes en communication fluidique avec ladite source d'urée, le système d'injection de fluide étant configuré pour évacuer un courant d'urée à l'intérieur du courant de gaz d'échappement ; et
un catalyseur (124) disposé en aval de l'ensemble injecteur de fluide.

13. Système de commande d'émission de gaz d'échappement selon la revendication 12, dans lequel le catalyseur est un convertisseur de réduction catalytique sélectif.

14. Système de commande d'émission de gaz d'échappement selon l'une quelconque des revendications 12 ou 13, dans lequel le moteur est un moteur diesel.

15. Système de commande d'émission de gaz d'échappement selon l'une quelconque des revendications 12 à 14, comprenant en outre un filtre à particules (120) disposé en amont ou en aval de l'ensemble injecteur de fluide.

16. Système de commande d'émission de gaz d'échappement selon la revendication 15, dans lequel dans un ou plusieurs éléments de chauffage (146) sont disposés en amont du filtre à particules.

17. Système de commande d'émission de gaz d'échappement selon la revendication 16, dans lequel le système inclut au moins deux éléments de chauffage (146) qui sont commandés indépendamment l'un de l'autre de sorte que la une température de courant de gaz d'échappement dans la plage allant d'environ 450 à 900 °F puisse être maintenue.
